(19) **Europäisches Patentamt**
**European Patent Office**
**Office européen des brevets**

(11) **EP 2 546 715 B1**

(12) **FASCICULE DE BREVET EUROPEEN**

(45) Date de publication et mention
de la délivrance du brevet:
**08.11.2017 Bulletin 2017/45**

(51) Int Cl.:
***G05D 1/00*** *(2006.01)*     ***B64C 27/57*** *(2006.01)*
***B64D 45/00*** *(2006.01)*     ***G05D 1/08*** *(2006.01)*

(21) Numéro de dépôt: **12004693.3**

(22) Date de dépôt: **22.06.2012**

(54) **PROCEDE DE PILOTAGE AUTOMATIQUE D'UN AERONEF A VOILURE TOURNANTE COMPRENANT AU MOINS UNE HELICE PROPULSIVE, DISPOSITIF DE PILOTAGE AUTOMATIQUE ET AERONEF ASSOCIES**

Selbststeuerungsverfahren eines Drehflügelflugzeugs, das mindestens einen Druckpropeller umfasst, entsprechende Autopilot und Flugzeug

Method for automatic piloting of a rotary wing aircraft comprising at least one thruster propeller, associated automatic piloting device and aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2011 FR 1102191**

(43) Date de publication de la demande:
**16.01.2013 Bulletin 2013/03**

(73) Titulaire: **Airbus Helicopters**
**13725 Marignane Cedex (FR)**

(72) Inventeur: **Eglin, Paul**
**13830 Roquefort-La Bedoule (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**WO-A1-99/50611**     **US-A1- 2008 237 392**
**US-A1- 2010 224 720**     **US-B1- 7 677 492**

EP 2 546 715 B1

## Description

La présente invention concerne un procédé de pilotage automatique d'un aéronef à voilure tournante comprenant au moins une hélice propulsive, un dispositif de pilotage automatique et un aéronef.

Parmi les aéronefs, on connaît notamment les giravions pourvus d'une voilure tournante dont les hélicoptères.

Par exemple, un hélicoptère comprend une voilure tournante, cette voilure tournante incluant au moins un rotor principal assurant la propulsion et la sustentation de cet hélicoptère.

L'assiette longitudinale et donc l'angle de tangage de l'hélicoptère sont alors nécessairement fonction de la vitesse de déplacement de cet hélicoptère. A grande vitesse, un hélicoptère présente ainsi un angle de tangage important, et par suite une forte assiette longitudinale à piquer.

On comprend alors qu'à grande vitesse, l'hélicoptère présente une incidence aérodynamique à piquer élevée, cette incidence aérodynamique générant une traînée aérodynamique pénalisante.

On rappelle que l'assiette longitudinale d'un giravion représente l'angle de tangage dudit giravion c'est-à-dire l'angle séparant l'axe longitudinal de référence du giravion et la projection orthogonale de cet axe longitudinal de référence sur un plan normal à la direction de la pesanteur.

L'incidence aérodynamique d'un giravion représente par contre l'angle séparant l'axe longitudinal de référence du giravion et la projection orthogonale dans un plan vertical comprenant ledit axe longitudinal du vecteur vitesse air de ce giravion.

Enfin, on appelle par pente air l'angle du vecteur vitesse air de cet aéronef par rapport à sa projection orthogonale sur un plan normal à la direction de la pesanteur.

Dès lors, l'assiette longitudinale d'un giravion est égale à la somme algébrique de l'incidence aérodynamique et de la pente air de cet aéronef.

Par ailleurs, certains giravions sont en outre munis d'au moins une hélice propulsive.

Il devient alors possible d'ajuster indépendamment la vitesse longitudinale d'avancement, la vitesse verticale et l'assiette longitudinale d'un tel giravion.

La présente invention a alors pour objet de proposer un procédé pour faciliter la charge de travail d'un pilote d'un aéronef à voilure tournante muni d'au moins une hélice propulsive, ce procédé permettant éventuellement de minimiser la traînée aérodynamique de l'aéronef.

On note que l'état de la technique inclut le document US2011/040431, et le document US 2008/0237392 qui présentent un aéronef à voilure tournante muni d'une hélice propulsive.

Selon le document US 2008/0237392, un sous-système d'une architecture de contrôle a pour objet le contrôle vertical et en tangage de l'aéronef.

Le document WO 99/50611 fait partir d'un domaine technique éloigné de l'invention, ce document WO99/50611 ayant trait à un système de contrôle et de tir.

L'invention vise alors un procédé de pilotage automatique d'un aéronef selon la revendication 1, l'aéronef comprenant une voilure tournante et au moins une hélice propulsive, cette voilure tournante comprenant au moins un rotor muni d'une pluralité de pales.

Ce procédé est notamment remarquable en ce que durant un mode de pilotage de tenue d'incidence assisté, on maintient l'incidence aérodynamique de l'aéronef égale à une incidence de référence en pilotant automatiquement le pas collectif desdites pales.

La charge de travail du pilote est alors allégée, ce pilote pouvant éventuellement se concentrer pour contrôler uniquement deux paramètres, à savoir l'assiette longitudinale et la vitesse longitudinale d'avancement par exemple et non trois paramètres. De plus, le pilote peut manoeuvrer l'aéronef en requérant une incidence aérodynamique optimale pour minimiser la traînée aérodynamique de cet aéronef.

On comprend que l'on entend par « on maintient l'incidence aérodynamique de l'aéronef égale à une incidence de référence », le fait que l'on tend à maintenir l'incidence aérodynamique de l'aéronef égale à une incidence de référence. En effet, dès que l'incidence aérodynamique de l'aéronef n'est plus égale à l'incidence de référence, on agit sur le pas collectif des pales pour y remédier.

A l'inverse, on note que le document US 2008/0237392 ne fait pas référence à une incidence.

De plus, le document WO 99/50611 ne suggère pas un mode tenue d'incidence assisté pour maintenir l'incidence de l'aéronef égale à une consigne, mais un mode de tenue d'altitude durant lequel un angle d'attaque ne doit pas dépasser une limite pour permettre un tir.

Le mode tenue d'incidence selon l'invention ne vise pas à maintenir l'altitude de l'aéronef constante, mais à maintenir l'incidence de l'aéronef constante.

Le procédé peut de plus comporter une ou plusieurs des caractéristiques qui suivent.

Par exemple, on peut piloter automatiquement le pas collectif des pales pour contrôler une vitesse air verticale de l'aéronef de manière à maintenir l'incidence aérodynamique de l'aéronef égale à une incidence de référence selon la relation suivant :

$$\alpha* = \theta - \text{Arc sin} \ (VZ \ / \ TAS)$$

où « VZ » représente la vitesse air verticale de l'aéronef, « TAS » représente la vitesse air vraie de l'aéronef, « $\theta$ » représente une assiette longitudinale courante et « $\alpha*$ » représente l'incidence de référence.

En effet, sur un tel aéronef, le système de paramètres incluant la vitesse air longitudinale, la vitesse air verticale et l'assiette longitudinale peut être remplacé par un système alternatif incluant la vitesse vraie de l'aéronef dénommée « true air speed » en langue anglaise, l'assiette longitudinale et l'incidence aérodynamique de l'aéronef.

La pente air de l'aéronef peut alors être obtenue à l'aide de la relation suivante :

$$\gamma = \text{Arc sin (VZ / TAS)}$$

où « $\gamma$ » représente la pente air, « VZ » représente la vitesse air verticale de l'aéronef, et « TAS » représente la vitesse air vraie.

Selon l'invention, on en déduit l'équation suivante :

$$\alpha* = \theta - \text{Arc sin ( VZ / TAS )}$$

où « VZ » représente la vitesse air verticale de l'aéronef, « TAS » représente la vitesse air vraie, « $\theta$ » représente l'assiette longitudinale courante et « $\alpha*$ » représente l'incidence aérodynamique.

Pour une assiette longitudinale donnée, en pilotant le pas collectif des pales, on modifie la vitesse air verticale et donc l'incidence aérodynamique de l'aéronef.

Si la vitesse d'avancement de l'aéronef évolue et donc si la vitesse air vraie évolue, ou si l'assiette longitudinale courante évolue, on modifie automatiquement le pas collectif des pales pour maintenir l'incidence aérodynamique de l'aéronef égale à l'incidence de référence.

Selon un autre aspect, l'incidence de référence peut être égale à l'incidence aérodynamique courante de l'aéronef au moment de l'engagement du mode de pilotage de tenue d'incidence assisté.

Ce procédé est alors simple, le pilote n'ayant pas à régler une incidence de référence préalablement à l'engagement du mode de pilotage de tenue d'incidence assisté.

De plus, on peut modifier la valeur de l'incidence de référence en vol.

Ainsi, un pilote peut ajuster l'incidence de référence s'il l'estime nécessaire.

Une nouvelle incidence de référence peut être déterminée à l'aide d'un moyen de réglage tel qu'un :

- bouton agencé sur une commande de pas collectif d'une chaîne de commande du pas collectif des pales de la voilure tournante, ce bouton visant à augmenter ou à baisser le pas collectif des pales lorsque le mode de pilotage de tenue d'incidence assisté n'est pas engagé,

- moyen de manoeuvre dédié à cette application,

- bouton d'embrayage d'un vérin de trim agencé sur la chaîne de commande du pas collectif des pales de la voilure tournante, l'incidence courante au moment de l'embrayage du vérin de trim devenant l'incidence de référence.

Il est à noter que selon un premier mode de réalisation, le pilote agit sur l'assiette longitudinale de l'aéronef en contrôlant cycliquement le pas des pales de la voilure tournante. L'incidence aérodynamique étant maintenue à une incidence de référence, en pilotant l'assiette longitudinale au travers d'une commande de vol cyclique liée à au moins une chaîne de commande cyclique du pas cyclique des pales de la voilure tournante, le pilote modifie la pente air de l'aéronef. Il en résulte un confort de pilotage intéressant.

On comprend que l'on appelle « commande de vol cyclique », une commande de vol agissant sur le pas cyclique des pales de la voilure tournante.

Selon un deuxième mode de réalisation, on peut maintenir automatiquement l'assiette longitudinale égale à une assiette de référence longitudinale.

Selon ce deuxième mode de réalisation, l'aéronef comporte alors un système automatique pour maintenir l'assiette longitudinale égale à une assiette de référence. L'assiette de référence peut être l'assiette courante de l'aéronef au moment de l'engagement de ce système de tenue d'assiette, ou encore une assiette de référence fixée avec un bouton par exemple.

Ce système automatique peut être un système de pilote automatique connu sous la dénomination « Automatic Flight Control System » en langue anglaise et sous l'acronyme « AFCS ».

On comprend que dans l'équation suivante $\alpha* = \theta$ - Arc sin (VZ / TAS), « $\theta$ » représente alors l'assiette de référence longitudinale.

Selon une option, on gèle automatiquement l'assiette longitudinale de référence lorsqu'un pilote manoeuvre une commande de vol cyclique modifiant l'assiette longitudinale.

Si le pilote souhaite agir sur une commande de vol cyclique liée à au moins une chaîne de commande cyclique du pas cyclique des pales de la voilure tournante pour modifier l'assiette longitudinale, selon une variante basique la tenue d'assiette à une assiette de référence n'est plus assurée par le système de tenue d'assiette.

Dès lors, quand le pilote n'agit plus sur cette commande de vol cyclique, le système automatique de tenue d'assiette est automatiquement engagé, l'assiette de référence étant l'assiette de référence mémorisée avant l'action du pilote sur la commande de vol cyclique.

Par suite, selon cette variante basique, on ne modifie pas l'assiette de référence lorsque le pilote manoeuvre une commande de vol cyclique longitudinale pour contrôler manuellement l'assiette longitudinale, mais on inhibe le système automatique de tenue d'assiette.

Selon une variante tactique, on asservit automatiquement l'assiette de référence longitudinale sur la valeur courante de l'assiette longitudinale lorsqu'un pilote manoeuvre une commande de vol cyclique longitudinale modifiant l'assiette longitudinale

Dès lors, quand le pilote n'agit plus sur cette commande de vol cyclique, le système automatique de tenue d'assiette est automatiquement engagé, l'assiette de référence étant l'assiette courante au réengagement du système de tenue d'assiette.

De même, optionnellement, on ne maintient plus l'incidence aérodynamique de l'aéronef égale à une incidence de référence lorsqu'un pilote agit sur une commande de vol collective du pas collectif desdites pales de la voilure tournante.

Il est à noter que l'on peut par exemple utiliser des bielles d'efforts agencées sur des chaînes cinématiques de commande pour déterminer si un pilote manoeuvre une commande de vol.

Par ailleurs, on peut borner l'incidence de référence.

Pour des raisons de sécurité, on empêche la mémorisation de valeurs aberrantes voire dangereuses en bornant l'incidence de référence, dans une plage comprise entre -4 degrés et +4 degrés par exemple.

Selon un autre aspect, on peut afficher un premier symbole représentant un vecteur vitesse air de référence sur un horizon artificiel, pour qu'un pilote visualise une pente air de référence et l'incidence de référence.

Selon le premier mode de réalisation, l'assiette longitudinale est pilotée par le pilote de l'aéronef, l'angle entre l'assiette courante affichée sur l'horizon artificiel et le vecteur vitesse air de référence illustre alors de fait l'incidence de référence.

Selon le deuxième mode de réalisation, on affiche sur l'horizon artificiel un deuxième symbole représentant une assiette longitudinale de référence.

L'angle séparant le premier symbole et le deuxième symbole représente alors de fait l'incidence de référence.

En outre, il est envisageable d'afficher un troisième symbole représentant le vecteur vitesse air courant sur l'horizon artificiel, le vecteur vitesse air courant représentant la pente air courante de l'aéronef.

De plus, Il est envisageable d'afficher un quatrième symbole représentant le vecteur vitesse sol courant sur l'horizon artificiel, le vecteur vitesse sol courant représentant la pente sol courante de l'aéronef.

Eventuellement, quand au moins un symbole est affiché sur un horizon artificiel pour illustrer l'incidence de référence, on peut modifier la couleur de ce symbole lorsque le pilotage automatique du pas collectif des pales pour tenir ladite incidence de référence nécessite une puissance supérieure à une puissance seuil, et on modifie automatiquement l'incidence de référence pour respecter cette puissance seuil.

En effet, l'invention visant à maintenir l'incidence aérodynamique à une incidence de référence en agissant au travers du pas collectif des pales de la voilure tournante, il y a un risque de sortir de la plage de puissance allouée à cette voilure tournante.

Dans cette configuration, on modifie l'incidence de référence pour que cette situation n'arrive pas, et on en informe le pilote en changeant de couleur au moins un symbole illustrant l'incidence de référence.

L'aéronef à voilure tournante comprenant de plus au moins une aile, on note que les symboles affichés pour illustrer l'incidence de référence ou l'incidence courante permettent d'évaluer l'incidence de l'aile de l'aéronef et donc de prévenir le décrochage de cette aile.

Outre un procédé, l'invention a aussi pour objet un dispositif mettant en oeuvre ce procédé selon la revendication 14.

L'invention vise alors un dispositif de pilotage automatique d'un aéronef à voilure tournante, l'aéronef comprenant au moins une hélice propulsive, cette voilure tournante comprenant au moins un rotor muni d'une pluralité de pales, le dispositif comprenant une unité de traitement coopérant avec au moins une chaîne de commande collective du pas collectif desdites pales.

Ce dispositif est notamment remarquable en ce qu'il comporte un moyen d'engagement d'un mode de pilotage de tenue d'incidence assisté relié à l'unité de traitement, l'unité de traitement pilotant automatiquement le pas collectif des pales lorsque le mode de pilotage de tenue d'incidence assisté est engagé en contrôlant la chaîne de commande collective pour maintenir une incidence aérodynamique de l'aéronef à une incidence de référence.

Ce dispositif peut de plus comporter une ou plusieurs des caractéristiques additionnelles qui suivent.

L'unité de traitement pilotant automatiquement le pas collectif desdites pales pour contrôler une vitesse air verticale de l'aéronef de manière à maintenir l'incidence de l'aéronef égale à une incidence de référence selon la relation suivante $\alpha^*=\theta-Arcsin(VZ/TAS)$ où « VZ » représente la vitesse air verticale de l'aéronef, « TAS » représente la vitesse air vraie de l'aéronef, « $\theta$ » représente une assiette longitudinale courante de l'aéronef et « $\alpha^*$ » représente l'incidence de référence, le dispositif peut comprendre un ensemble de moyens reliés à l'unité de traitement pour déterminer la vitesse air verticale de l'aéronef, la vitesse air vraie de l'aéronef et l'assiette longitudinale courante.

Par exemple, l'ensemble de moyens possède :

- un premier moyen de détermination usuel de la vitesse air vraie mettant en oeuvre un tube de Pitot ou analogue,

- un deuxième moyen de détermination usuel de l'assiette longitudinale mettant en oeuvre un équipement dénommé « Attitude Heading Reference System » en langue anglaise,

- un troisième moyen de détermination usuel de la vitesse air verticale mettant en oeuvre une prise de pression statique.

Selon un autre aspect, le dispositif peut comporter un moyen de réglage de l'incidence de référence relié à l'unité de traitement.

Par ailleurs, le dispositif peut comporter un système automatique pour maintenir une assiette longitudinale de l'aéronef égale à une assiette de référence, ce système automatique coopérant avec au moins une chaîne de commande cyclique longitudinale du pas cyclique des pales de la voilure tournante.

Le système automatique peut selon une variante comprendre un calculateur dédié.

Selon une autre variante, l'unité de traitement remplit le rôle du système automatique. L'unité de traitement a alors autorité sur les chaînes de commande cyclique et collective du pas des pales.

En outre, le dispositif peut comporter un afficheur relié à l'unité de traitement pour afficher au moins un symbole illustrant l'incidence de référence.

Enfin, l'invention vise un aéronef à voilure tournante comprenant au moins une hélice propulsive, cet aéronef ayant un dispositif de pilotage tel que décrit précédemment.

L'invention et ses avantages apparaîtront avec plus de détails dans le cadre de la description qui suit avec des exemples de réalisation donnés à titre illustratif en référence aux figures annexées qui représentent :

- la figure 1, un schéma présentant un aéronef,

- les figures 2 et 3, des schémas présentant un premier mode de réalisation,

- les figures 4 et 5, des schémas présentant un deuxième mode de réalisation.

Les éléments présents dans plusieurs figures distinctes sont affectés d'une seule et même référence.

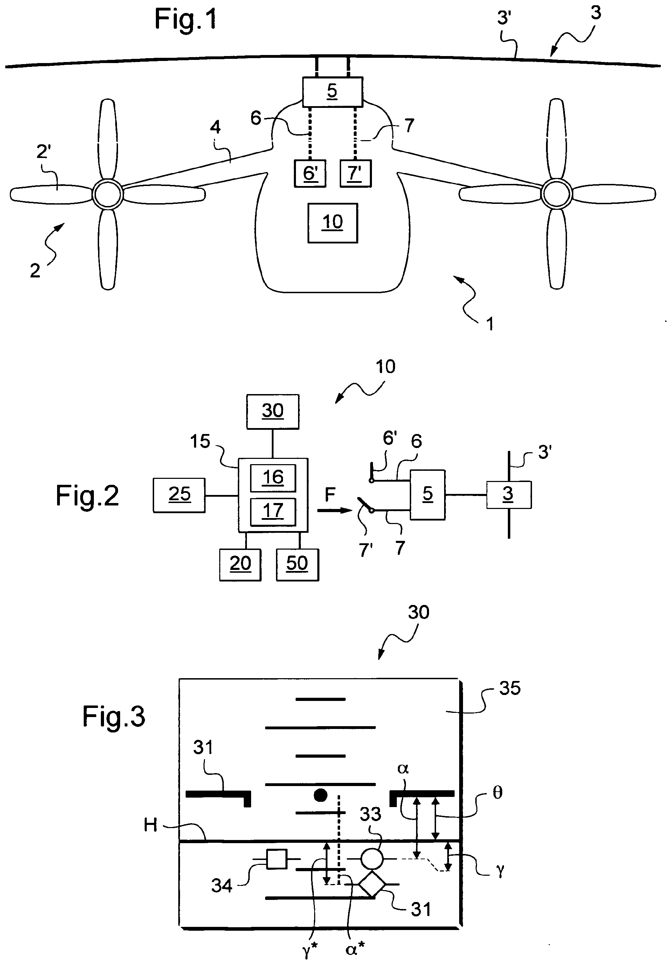

La figure 1 présente un aéronef 1 muni d'une voilure tournante et d'au moins une hélice propulsive 2.

Chaque hélice propulsive 2 comprend une pluralité de premières pales 2' pour notamment participer à la propulsion de l'aéronef. On note de plus que l'aéronef pouvant être aussi muni d'une voilure fixe 4, les hélices propulsives 2 peuvent être agencées sur cette voilure fixe 4.

Par ailleurs, la voilure tournante 3 comprend au moins un rotor 3 muni d'une pluralité de deuxièmes pales 3', dénommées parfois plus simplement « pales 3' ».

Dès lors, l'aéronef comporte un moyen de réglage 5 du pas des deuxièmes pales 3', ce moyen de réglage 5 pouvant comprendre au moins trois servocommandes non représentées pour modifier le pas collectif et le pas cyclique des deuxièmes pales 3'.

En effet, si les servocommandes s'étendent ou se rétractent de la même quantité, le pas collectif des deuxièmes pales 3' est modifié. Par contre, si une servocommande se comporte différemment des autres, le pas cyclique des deuxièmes pales 3' est modifié. On se référera à la littérature si nécessaire pour obtenir des compléments d'informations relatives au pas collectif et au pas cyclique d'un rotor de giravion.

Pour le contrôle manuel du pas collectif des deuxièmes pales 3', l'aéronef comporte une chaîne de commande collective 7 reliée au moyen de réglage. La chaîne de commande collective 7 coopère alors avec une commande de vol collective 7' de type levier de pas collectif par exemple.

De plus, pour le contrôle manuel du pas cyclique des deuxièmes pales 3', l'aéronef comporte au moins une chaîne de commande cyclique 6 reliée au moyen de réglage. Chaque chaîne de commande cyclique 6 coopère alors avec une commande de vol cyclique 6' de type manche cyclique par exemple.

Ainsi, une chaîne de commande cyclique longitudinale permet de requérir une modification de l'assiette longitudinale de l'aéronef 1.

Par ailleurs, l'aéronef 1 est alors pourvu d'un dispositif 10 de pilotage automatique coopérant avec les chaînes de commande, via notamment des vérins parallèles ou des vérins de trim relativement lents mais ayant une grande amplitude de mouvement et/ou des vérins séries relativement rapides mais ayant une faible amplitude de mouvement.

Le dispositif 10 peut aussi coopérer avec un système à commandes de vol électriques ou optiques.

La figure 2 présente un dispositif 10 selon un premier mode de réalisation.

Indépendamment du mode de réalisation, le dispositif 10 comporte une unité de traitement 15. Cette unité de traitement peut comporter un moyen de calcul 16 exécutant des instructions mémorisées dans une mémoire 17.

Conformément à la flèche F, l'unité de traitement 15 est alors apte à commander notamment une chaîne de commande collective 7 pour modifier le pas collectif des deuxièmes pales 3', en contrôlant un vérin parallèle et/ ou un vérin série de cette chaîne de commande collective 7 par exemple.

A cet effet, l'unité de traitement 15 peut être reliée à un moyen d'engagement 20 d'un mode de pilotage de tenue d'incidence assisté.

Durant ce mode de pilotage de tenue d'incidence assisté, on maintient automatiquement l'incidence aérodynamique $\alpha$ de l'aéronef égale à une incidence de référence $\alpha^*$ en pilotant automatiquement le pas collectif desdites deuxièmes pales 3'. On comprend que l'expression « on maintient automatiquement l'incidence aérodynamique $\alpha$ de l'aéronef égale à une incidence de référence $\alpha^*$ » signifie que l'on asservit le pilotage du pas collectif des pales pour que l'incidence aérodynamique courante de l'aéronef tende vers l'incidence de référence, voire soit égale à cette incidence de référence.

Ainsi, lorsqu'un pilote requiert la mise en oeuvre du mode de pilotage de tenue d'incidence assisté au travers d'une manipulation du moyen d'engagement 20, l'unité de traitement 15 pilote automatiquement le pas collectif des pales 3 en contrôlant ladite chaîne de commande collective pour maintenir une incidence aérodynamique α de l'aéronef égale à une incidence de référence α*.

L'incidence de référence α* peut être égale à l'incidence aérodynamique courante α de l'aéronef 1 au moment de l'engagement du mode de pilotage de tenue d'incidence assisté.

Cependant, il est possible de modifier manuellement la valeur de l'incidence de référence α* en vol.

En effet, le dispositif 10 peut inclure un moyen de réglage 20 pilotable par un pilote pour définir cette valeur de l'incidence de référence α*.

Indépendamment de la version, on note que l'incidence de référence peut être bornée par l'unité de traitement 15.

En outre, le dispositif 10 peut comporter un afficheur 30 relié à l'unité de traitement 15 pour afficher au moins un symbole illustrant l'incidence de référence α*.

Pour piloter automatiquement le pas collectif desdites deuxièmes pales 3', l'unité de traitement 15 peut contrôler une vitesse air verticale de l'aéronef de manière à maintenir l'incidence aérodynamique de l'aéronef égale à une incidence de référence selon la relation suivante

$$\alpha* = \theta - \text{Arc sin} \left( VZ / TAS \right)$$

où « VZ » représente la vitesse air verticale de l'aéronef, « TAS » représente la vitesse air vraie de l'aéronef, « θ » représente une assiette longitudinale courante de l'aéronef et « α* » représente l'incidence de référence.

Dès lors, le dispositif 10 comprend un ensemble de moyens 25 reliés à l'unité de traitement pour déterminer la vitesse air verticale de l'aéronef, la vitesse air vraie de l'aéronef et l'assiette longitudinale courante.

Selon le premier mode de réalisation, le pilote agit sur l'assiette longitudinale courante de l'aéronef en contrôlant cycliquement le pas des deuxièmes pales 3' de la voilure tournante au travers de la commande de vol cyclique 6'.

Dès lors, en référence à la figure 3, l'afficheur 30 peut comprendre un horizon artificiel 35 sur lequel apparaît une maquette 31 de l'aéronef 1.

L'unité de traitement requiert l'affichage d'un premier symbole 31 pour visualiser l'incidence de référence.

En effet, l'unité de traitement 15 détermine une pente air de référence γ* correspondant à un vecteur vitesse air de référence V*, et affiche un premier symbole 31 représentant cette pente air de référence γ* et le vecteur vitesse air de référence V*.

Le premier symbole 31 est alors obtenu par l'équation γ*=θ-α*.

Ainsi, le premier espace séparant la maquette 31 de l'horizon H̲ représente l'assiette longitudinale courante θ, le deuxième espace séparant l'horizon H̲ d'un troisième symbole 33 représentant la pente air de référence γ*, le troisième espace séparant la maquette 31 du troisième symbole 33 représentant l'incidence de référence α*.

Le pilote visualise donc aisément cette incidence de référence.

On note en outre que l'unité de traitement peut requérir l'affichage d'un symbole dénommé par commodité « troisième symbole 33 » représentant alors le vecteur vitesse air actuel de l'aéronef. Le quatrième espace séparant l'horizon H̲ du troisième symbole 33 représente alors la pente air actuelle, le cinquième espace séparant la maquette 31 du troisième symbole 33 représentant l'incidence aérodynamique courante α.

De plus, l'unité de traitement peut requérir l'affichage d'un quatrième symbole 34 représentant alors le vecteur vitesse sol. Le sixième espace séparant l'horizon H̲ du quatrième symbole 34 représente alors la pente sol courante.

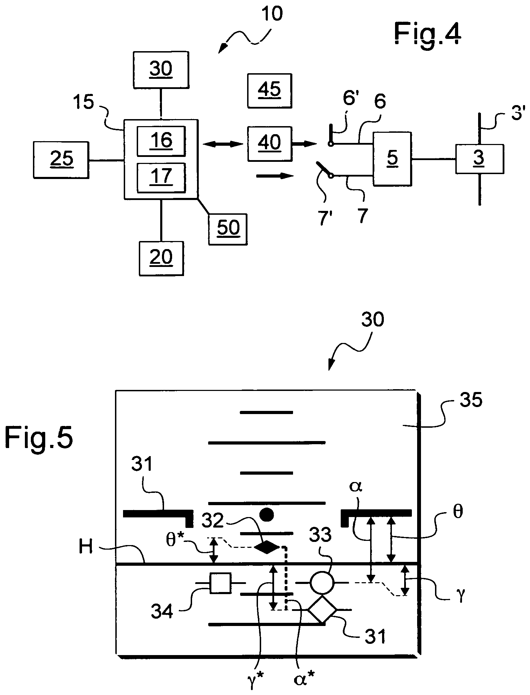

En référence à la figure 4, selon le deuxième mode de réalisation, on maintient automatiquement l'assiette longitudinale θ égale à une assiette de référence θ* longitudinale. L'assiette longitudinale courante est alors égale à l'assiette de référence.

Par conséquent, le dispositif 10 comprend alors un système automatique 40 pour maintenir une assiette longitudinale de l'aéronef égale à une assiette de référence. Le dispositif 10 peut comprendre un organe de réglage 45 de l'assiette de référence, voire un organe d'engagement de ce mode de réalisation.

On comprend que l'expression « pour maintenir une assiette longitudinale de l'aéronef égale à une assiette de référence » signifie que l'on asservit le pilotage du pas cyclique longitudinal des pales 3' pour que l'assiette longitudinale courante de l'aéronef tende vers l'assiette de référence, voire soit égale à cette assiette de référence.

Ce système automatique 40 coopère avec au moins une chaîne de commande cyclique longitudinale 6 du pas cyclique des pales de la voilure tournante.

De plus, le système automatique peut être intégré à l'unité de traitement 15.

L'ensemble de moyens 25 peut par ailleurs comporter des capteurs d'efforts présents sur la chaîne de commande cyclique longitudinale.

Par suite, selon une variante basique, le système automatique 40 ne modifie pas l'assiette de référence lorsque le pilote manoeuvre une commande de vol cyclique longitudinale pour contrôler manuellement l'assiette longitudinale. Toutefois, ce système automatique de tenue d'assiette est alors inhibé.

Lorsque le pilote n'agit plus sur cette commande de vol cyclique, le système automatique de tenue d'assiette est automatiquement engagé, l'assiette de référence étant l'assiette de référence mémorisée avant l'action du pilote sur la commande de vol cyclique.

Selon une variante tactique, on asservit automatiquement l'assiette de référence longitudinale sur la valeur courante de l'assiette longitudinale lorsqu'un pilote manoeuvre une commande de vol cyclique longitudinale modifiant l'assiette longitudinale

Dès lors, quand le pilote n'agit plus sur cette commande de vol cyclique, le système automatique de tenue d'assiette est automatiquement engagé, l'assiette de référence étant l'assiette courante au réengagement du système de tenue d'assiette.

En référence à la figure 5, selon ce deuxième mode de réalisation l'unité de traitement 15 détermine une pente air de référence $\gamma^*$ correspondant à un vecteur vitesse air de référence V*, et affiche un premier symbole 31 représentant cette pente air de référence $\gamma^*$ et le vecteur vitesse air de référence V*.

Le premier symbole 31 est alors obtenu par l'équation $\gamma^* = \theta^* - \alpha^*$, où $\theta^*$ représente l'assiette de référence.

De plus, l'unité de traitement peut requérir l'affichage d'un deuxième symbole 32 représentant cette assiette de référence $\theta^*$ et du troisième symbole présenté précédemment.

Ainsi, le premier espace séparant le deuxième symbole 32 de l'horizon H représente l'assiette de référence $\theta^*$, le deuxième espace séparant l'horizon H du troisième symbole 33 représentant la pente air de référence $\gamma^*$, le troisième espace séparant le deuxième symbole 32 du troisième symbole 33 représentant l'incidence de référence $\alpha^*$.

Le pilote visualise donc aisément cette incidence de référence.

De plus, l'unité de traitement peut requérir l'affichage d'un quatrième symbole 34 représentant alors le vecteur vitesse sol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

**1.** Procédé de pilotage automatique d'un aéronef (1) à voilure tournante, ledit aéronef comprenant au moins une hélice propulsive (2), ladite voilure tournante comprenant au moins un rotor (3) muni d'une pluralité de pales (3'),
**caractérisé en ce que** durant un mode de pilotage de tenue d'incidence assisté, on maintient l'incidence aérodynamique ($\alpha$) de l'aéronef égale à une incidence de référence ($\alpha^*$) en pilotant automatiquement le pas collectif desdites pales (3') et en fonction d'une assiette longitudinale et d'une vitesse d'avancement de l'aéronef.

**2.** Procédé selon la revendication 1,
**caractérisé en ce qu'**on pilote automatiquement le pas collectif desdites pales (3') pour contrôler une vitesse air verticale de l'aéronef de manière à maintenir l'incidence aérodynamique de l'aéronef égale à une incidence de référence selon la relation suivant :

$$\alpha^* = \theta - \text{Arc sin} \ (VZ \ / \ TAS)$$

où « VZ » représente la vitesse air verticale de l'aéronef, « TAS » représente une vitesse air vraie de l'aéronef, « $\theta$ » représente une assiette longitudinale courante et « $\alpha^*$ » représente l'incidence de référence.

**3.** Procédé selon la revendication 1,
**caractérisé en ce que** l'incidence de référence ($\alpha^*$) est égale à l'incidence aérodynamique courante ($\alpha$) de l'aéronef au moment de l'engagement du mode de pilotage de tenue d'incidence assisté.

**4.** Procédé selon l'une quelconque des revendications 1 à 3,
**caractérisé en ce que** l'on modifie la valeur de l'incidence de référence ($\alpha^*$) en vol.

**5.** Procédé selon l'une quelconque des revendications 1 à 4,
**caractérisé en ce qu'**on maintient automatiquement l'assiette longitudinale ($\theta$) égale à une assiette de référence ($\theta^*$) longitudinale, l'assiette longitudinale courante étant égale à cette assiette de référence ($\theta^*$).

**6.** Procédé selon la revendication 5,
**caractérisé en ce qu'**on asservit automatiquement l'assiette de référence ($\theta^*$) sur la valeur courante ($\theta$) de l'assiette longitudinale lorsqu'un pilote manoeuvre une commande de vol cyclique longitudinale (6') du pas cyclique des pales (3') de la voilure tournante modifiant l'assiette longitudinale.

**7.** Procédé selon la revendication 5,
**caractérisé en ce qu'**on gèle l'assiette de référence longitudinale lorsqu'un pilote manoeuvre une commande de vol cyclique longitudinale (6') modifiant l'assiette longitudinale.

**8.** Procédé selon l'une quelconque des revendications 1 à 7,
**caractérisé en ce qu'**on borne l'incidence de référence ($\alpha^*$).

**9.** Procédé selon l'une quelconque des revendications 1 à 8,
**caractérisé en ce qu'**on affiche un premier symbole (31) représentant un vecteur vitesse air de référence sur un horizon artificiel (35), pour qu'un pilote visualise une pente air de référence et par suite l'incidence de référence.

**10.** Procédé selon la revendication 9,
**caractérisé en ce qu'**on affiche sur ledit horizon artificiel un deuxième symbole (32) représentant une assiette longitudinale de référence ($\theta^*$).

**11.** Procédé selon l'une quelconque des revendications 9 ou 10,
**caractérisé en ce qu'**on affiche sur ledit horizon artificiel (35) un troisième symbole (33) représentant un vecteur vitesse air courant.

**12.** Procédé selon l'une quelconque des revendications 9 ou 10,
**caractérisé en ce qu'**on affiche sur ledit horizon artificiel (35) un quatrième symbole (34) représentant un vecteur vitesse sol courant.

**13.** Procédé selon l'une quelconque des revendications 9 à 12,
**caractérisé en ce qu'**au moins un symbole (31, 32, 33, 34) étant affiché sur un horizon artificiel (35) pour illustrer l'incidence de référence, on modifie la couleur dudit symbole lorsque le pilotage automatique du pas collectif desdites pales pour tenir ladite incidence de référence nécessite une puissance supérieure à une puissance seuil, et on modifie automatiquement l'incidence de référence ($\alpha^*$) pour respecter ladite puissance seuil.

**14.** Dispositif (10) de pilotage automatique d'un aéronef (1) à voilure tournante, ledit aéronef comprenant au moins une hélice propulsive (2), ladite voilure tournante comprenant au moins un rotor (3) muni d'une pluralité de pales (3'), ledit dispositif comprenant une unité de traitement (15) coopérant avec au moins une chaîne de commande collective (7) du pas collectif desdites pales (3'),
**caractérisé en ce qu'**il comporte un moyen d'engagement (20) d'un mode de pilotage de tenue d'incidence assisté relié à l'unité de traitement (15), ladite unité de traitement (15) étant adaptée pour piloter automatiquement le pas collectif des pales (3') lorsque le mode de pilotage de tenue d'incidence assisté est engagé en contrôlant ladite chaîne de commande collective pour maintenir une incidence aérodynamique ($\alpha$) de l'aéronef à une incidence de référence ($\alpha^*$) en fonction d'une assiette longitudinale et d'une vitesse d'avancement de l'aéronef.

**15.** Dispositif selon la revendication 14,

**caractérisé en ce que** l'unité de traitement (15) pilotant automatiquement le pas collectif desdites pales (3') pour contrôler une vitesse air verticale de l'aéronef de manière à maintenir l'incidence aérodynamique de l'aéronef égale à une incidence de référence selon la relation suivante $\alpha^* = \theta$ - Arc sin (VZ / TAS) où « VZ » représente la vitesse air verticale de l'aéronef, « TAS » représente une vitesse air vraie de l'aéronef, « $\theta$ » représente une assiette longitudinale courante de l'aéronef et « $\alpha^*$ » représente l'incidence de référence, ledit dispositif comprend un ensemble de moyens reliés à l'unité de traitement pour déterminer la vitesse air verticale de l'aéronef, la vitesse air vraie de l'aéronef et l'assiette longitudinale courante.

**16.** Dispositif selon l'une quelconque des revendications 14 ou 15,
**caractérisé en ce qu'**il comporte un moyen de réglage (50) de l'incidence de référence relié à l'unité de traitement (15).

**17.** Dispositif selon l'une quelconque des revendications 14 à 16,
**caractérisé en ce qu'**il comporte un système automatique (40) pour maintenir une assiette longitudinale de l'aéronef égale à une assiette de référence, ledit système automatique (40) coopérant avec au moins une chaîne de commande cyclique longitudinale (6) du pas cyclique des pales de la voilure tournante.

**18.** Dispositif selon l'une quelconque des revendications 14 à 17,
**caractérisé en ce qu'**il comporte un afficheur (30) relié à l'unité de traitement (15) pour afficher au moins un symbole illustrant l'incidence de référence.

**19.** Aéronef (1) à voilure tournante comprenant au moins une hélice propulsive,
**caractérisé en ce qu'**il comporte un dispositif (10) de pilotage selon l'une quelconque des revendications 14 à 18.

**Patentansprüche**

**1.** Automatisches Steuerungsverfahren eines Drehflügelflugzeugs (1), wobei das Flugzeug mindestens einen Vortriebspropeller (2) aufweist, wobei die Drehflügelanordnung mindestens einen Rotor (3) aufweist, der mit einer Mehrzahl von Rotorblättern (3') versehen ist, **dadurch gekennzeichnet, dass**, während eines unterstützten Steuerungsmodus des Anstellwinkelverhaltens der effektive Anstellwinkel ($\alpha$) des Flugzeugs gleich einem Bezugsanstellwinkel ($\alpha^*$) gehalten wird, indem der kollektive Verstellwinkel der Rotorblätter (3') automatisch und in Abhängigkeit von einer Neigung und einer Vortriebsgeschwindigkeit des Flugzeugs gesteuert wird.

2. Verfahren nach Anspruch 1,
**dadurch gekennzeichnet, dass** der kollektive Verstellwinkel der Rotorblätter (3') automatisch gesteuert wird, um eine vertikale Fluggeschwindigkeit des Flugzeugs so zu steuern, dass der effektive Anstellwinkel des Flugzeugs gleich einem Bezugsanstellwinkel gemäß der folgenden Beziehung gehalten wird:

$$\alpha^* = \theta - \text{Arc sin (VZ/TAS)},$$

wobei "VZ" die vertikale Fluggeschwindigkeit des Flugzeugs bezeichnet, "TAS" eine wahre Fluggeschwindigkeit des Flugzeugs bezeichnet, "$\theta$" eine momentane Neigung, und "$\alpha^*$" einen Bezugsanstellwinkel bezeichnet.

3. Verfahren nach Anspruch 1,
**dadurch gekennzeichnet, dass** der Bezugsanstellwinkel ($\alpha^*$) gleich dem momentanen effektiven Anstellwinkel ($\alpha$) des Flugzeugs zum Zeitpunkt des Einsatzes des unterstützten Steuerungsmodus des Anstellwinkelverhaltens ist.

4. Verfahren nach einem der Ansprüche 1 bis 3,
**dadurch gekennzeichnet, dass** der Wert des Bezugsanstellwinkels ($\alpha^*$) im Flug verändert wird.

5. Verfahren nach einem der Ansprüche 1 bis 4,
**dadurch gekennzeichnet, dass** die Neigung ($\theta$) automatisch gleich einer Bezugsneigung ($\theta^*$) gehalten wird, wobei die momentane Neigung gleich dieser Bezugsneigung ($\theta^*$) ist.

6. Verfahren nach Anspruch 5,
**dadurch gekennzeichnet, dass** die Bezugsneigung ($\theta^*$) automatisch auf den momentanen Wert ($\theta$) der Neigung geregelt wird, wenn ein Pilot eine periodische Flugsteuerung (6') des periodischen Verstellwinkels der Rotorblätter (3') der Drehflügelanordnung ausführt, wodurch die Neigung verändert wird.

7. Verfahren nach Anspruch 5,
**dadurch gekennzeichnet, dass** der Bezugsneigungswinkel eingefroren wird, wenn ein Pilot eine periodische Flugsteuerung (6') ausführt, durch die die Neigung verändert wird.

8. Verfahren nach einem der Ansprüche 1 bis 7,
**dadurch gekennzeichnet, dass** der Bezugsanstellwinkel ($\alpha^*$) begrenzt wird.

9. Verfahren nach einem der Ansprüche 1 bis 8,
**dadurch gekennzeichnet, dass** ein erstes Symbol (31) angezeigt wird, das einen Bezugsfluggeschwindigkeitsvektor auf einem künstlichen Horizont (35) darstellt, damit ein Pilot einen Bezugsflugbahnneigungswinkel und anschließend einen Bezugsanstellwinkel sieht.

10. Verfahren nach Anspruch 9,
**dadurch gekennzeichnet, dass** auf dem künstlichen Horizont ein zweites Symbol (32) angezeigt wird, das eine Bezugsneigung ($\theta^*$) darstellt.

11. Verfahren nach einem der Ansprüche 9 oder 10,
**dadurch gekennzeichnet, dass** auf dem künstlichen Horizont (35) ein drittes Symbol (33) angezeigt wird, das einen Vektor der momentanen Fluggeschwindigkeit darstellt.

12. Verfahren nach einem der Ansprüche 9 oder 10,
**dadurch gekennzeichnet, dass** auf dem künstlichen Horizont (35) ein viertes Symbol (34) angezeigt wird, das einen Vektor der momentanen Geschwindigkeit über Grund darstellt.

13. Verfahren nach einem der Ansprüche 9 bis 12,
**dadurch gekennzeichnet, dass** mindestens ein Symbol (31, 32, 33, 34) auf dem künstlichen Horizont (35) angezeigt wird, um den Bezugsanstellwinkel darzustellen, wobei die Farbe des entsprechenden Symbols geändert wird, wenn die automatische Steuerung des kollektiven Verstellwinkels der Rotorblätter, um den Bezugsanstellwinkel zu halten, eine Leistung erfordert, die größer als ein Leistungsschwellenwert ist, und der Bezugsanstellwinkel ($\alpha^*$) automatisch geändert wird, um den Leistungsschwellenwert zu beachten.

14. Vorrichtung (10) zur automatischen Steuerung eines Drehflügelflugzeugs (1), wobei das Flugzeug mindestens einen Vortriebspropeller (2) aufweist, wobei die Drehflügelanordnung mindestens einen Rotor (3) aufweist, der mit einer Mehrzahl von Rotorblättern (3') versehen ist, wobei die Vorrichtung eine Verarbeitungseinheit (15) aufweist, die mit mindestens einer kollektiven Steuerungskette (7) des kollektiven Verstellwinkels der Rotorblätter (3') zusammenwirkt, **dadurch gekennzeichnet, dass** die Vorrichtung ein Mittel (20) für den Einsatz eines unterstützten Steuerungsmodus des Anstellwinkels aufweist, das mit einer Verarbeitungseinheit (15) verbunden ist, wobei die Verarbeitungseinheit (15) ausgebildet ist, um den kollektiven Verstellwinkel der Rotorblätter (3') automatisch zu steuern, wenn der unterstützte Steuerungsmodus des Anstellwinkelverhaltens zur Steuerung der kollektiven Steuerungskette eingesetzt wird, um einen effektiven Anstellwinkel ($\alpha$) des Flugzeugs auf einem Bezugsanstellwinkel ($\alpha^*$) in Abhän-

gigkeit von einer Neigung und einer Vortriebsgeschwindigkeit des Flugzeugs zu halten.

15. Vorrichtung nach Anspruch 14,
**dadurch gekennzeichnet, dass** die Verarbeitungseinheit (15) den kollektiven Verstellwinkel der Rotorblätter (3') automatisch steuert, um eine vertikale Fluggeschwindigkeit des Flugzeugs so zu steuern, dass der effektive Anstellwinkel des Flugzeugs gleich einem Bezugsanstellwinkel gemäß der folgenden Gleichung gehalten wird:

$$\alpha* = \theta - \text{Arc sin (VZ/TAS)},$$

wobei "VZ" die vertikale Fluggeschwindigkeit des Flugzeugs bezeichnet, "TAS" eine wahre Fluggeschwindigkeit des Flugzeugs bezeichnet, "θ" eine momentane Neigung des Flugzeugs, und "α*" einen Bezugsanstellwinkel bezeichnet, wobei die Vorrichtung eine Gruppe von Mitteln aufweist, die mit der Verarbeitungseinheit verbunden sind, um die vertikale Fluggeschwindigkeit des Flugzeugs, die wahre Fluggeschwindigkeit des Flugzeugs und die momentane Neigung zu bestimmen.

16. Vorrichtung nach einem der Ansprüche 14 oder 15,
**dadurch gekennzeichnet, dass** sie ein Mittel (50) zum Regeln des Bezugsanstellwinkels aufweist, das mit der Verarbeitungseinheit (15) verbunden ist.

17. Vorrichtung nach einem der Ansprüche 14 bis 16,
**dadurch gekennzeichnet, dass** sie ein automatisches System aufweist, um eine Neigung des Flugzeugs gleich einer Bezugsneigung zu halten, wobei das automatische System (40) mit mindestens einer periodischen Steuerkette (6) des periodischen Verstellwinkels der Rotorblätter des Drehflügels zusammenwirkt.

18. Vorrichtung nach einem der Ansprüche 14 bis 17,
**dadurch gekennzeichnet, dass** sie eine Anzeige (30) aufweist, die mit der Verarbeitungseinheit (15) verbunden ist, um mindestens ein Symbol anzuzeigen, das den Bezugsanstellwinkel darstellt.

19. Drehflügelflugzeug (1) mit mindestens einem Vortriebspropeller,
**dadurch gekennzeichnet, dass** es eine Steuerungsvorrichtung (10) nach einem der Ansprüche 14 bis 18 aufweist.

## Claims

1. Method for automatic piloting of a rotary wing aircraft (1), said aircraft comprising at least one thruster propeller (2), said rotary wing comprising at least one rotor (3) equipped with a plurality of blades (3'), **characterized in that**, during an assisted mode of piloting for maintaining an angle of attack, the aerodynamic angle of attack ($\alpha$) of the aircraft is maintained equal to a reference angle of attack ($\alpha*$) by automatically controlling the collective pitch of said blades (3') and as a function of a longitudinal attitude and of a speed of travel of the aircraft.

2. Method according to claim 1,
**characterized in that** the collective pitch of said blades (3') is controlled automatically so as to control a vertical air speed of the aircraft in such a way as to maintain the aerodynamic angle of attack of the aircraft equal to a reference angle of attack according to the following relationship:

$$\alpha* = \theta - \text{Arc sin (VZ/TAS)}$$

where "VZ" represents the vertical air speed of the aircraft, "TAS" represents a true air speed of the aircraft, "θ" represents a current longitudinal attitude, and "α*" represents the reference angle of attack.

3. Method according to claim 1,
**characterized in that** the reference angle of attack ($\alpha*$) is equal to the current aerodynamic angle of attack ($\alpha$) of the aircraft at the moment of engagement of the assisted mode of piloting for maintaining the angle of attack.

4. Method according to any one of claims 1 to 3,
**characterized in that** the value of the reference angle of attack ($\alpha*$) is modified in flight.

5. Method according to any one of claims 1 to 4,
**characterized in that** the longitudinal attitude ($\theta$) is automatically maintained equal to a reference longitudinal attitude ($\theta*$), the current longitudinal attitude being equal to said reference attitude ($\theta*$).

6. Method according to claim 5,
**characterized in that** the reference attitude ($\theta*$) is automatically slaved to the current value ($\theta$) of the longitudinal attitude when a pilot operates a longitudinal cyclic flight control (6') for the cyclic pitch of the blades (3') of the rotary wing so as to modify the longitudinal attitude.

7. Method according to claim 5,
**characterized in that** the reference longitudinal attitude is frozen when a pilot operates a longitudinal cyclic flight control (6') so as to modify the longitudinal attitude.

8. Method according to any one of claims 1 to 7, **characterized in that** the reference angle of attack ($\alpha^*$) is bounded.

9. Method according to any one of claims 1 to 8, **characterized in that** a first symbol (31) representing a reference air speed vector is displayed on an artificial horizon (35) so that a pilot sees a reference air-path slope and consequently the reference angle of attack.

10. Method according to claim 9, **characterized in that** a second symbol (32) representing a reference longitudinal attitude ($\theta^*$) is displayed on said artificial horizon.

11. Method according to any one of claims 9 or 10, **characterized in that** a third symbol (33) representing a current air speed vector is displayed on said artificial horizon (35).

12. Method according to any one of claims 9 or 10, **characterized in that** a fourth symbol (34) representing a current ground speed vector is displayed on said artificial horizon (35).

13. Method according to any one of claims 9 to 12, **characterized in that**, at least one symbol (31, 32, 33, 34) being displayed on an artificial horizon (35) to illustrate the reference angle of attack, the colour of said symbol is modified when the automatic control of the collective pitch of said blades for maintaining said reference angle of attack requires a power greater than a threshold power, and the reference angle of attack ($\alpha^*$) is modified automatically in order to comply with said threshold power.

14. Automatic piloting device (10) for a rotary wing aircraft (1), said aircraft comprising at least one thruster propeller (2), said rotary wing comprising at least one rotor (3) equipped with a plurality of blades (3'), said device comprising a processing unit (15) cooperating with at least one collective control chain (7) for controlling the collective pitch of said blades (3'), **characterized in that** it comprises an engagement means (20) for engaging an assisted mode of piloting for maintaining an angle of attack, said engagement means being connected to the processing unit (15), said processing unit (15) being suitable for automatically controlling the collective pitch of the blades (3') when the assisted mode of piloting for maintaining an angle of attack is engaged by controlling said collective control chain to maintain an aerodynamic angle of attack ($\alpha$) of the aircraft at a reference angle of attack ($\alpha^*$) as a function of a longitudinal attitude and of a speed of travel of the aircraft.

15. Device according to claim 14, **characterized in that** the processing unit (15) automatically controlling the collective pitch of said blades (3') so as to control a vertical air speed of the aircraft in such a way as to maintain the aerodynamic angle of attack of the aircraft equal to a reference angle of attack according to the following relationship $\alpha^* = \theta$ - Arc sin (VZ/TAS), where "VZ" represents the vertical air speed of the aircraft, "TAS" represents a true air speed of the aircraft, "$\theta$" represents a current longitudinal attitude of the aircraft, and "$\alpha^*$" represents the reference angle of attack, said device comprises a set of means connected to the processing unit for determining the vertical air speed of the aircraft, the true air speed of the aircraft and the current longitudinal attitude.

16. Device according to any one of claims 14 or 15, **characterized in that** it comprises an adjustment means (50) for adjusting the reference angle of attack, said adjustment means being connected to the processing unit (15).

17. Device according to any one of claims 14 to 16, **characterized in that** it comprises an automatic system (40) for maintaining a longitudinal attitude of the aircraft equal to a reference attitude, said automatic system (40) cooperating with at least one longitudinal cyclic control chain (6) for controlling the cyclic pitch of the blades of the rotary wing.

18. Device according to any one of claims 14 to 17, **characterized in that** it comprises a display (30) connected to the processing unit (15) for displaying at least one symbol illustrating the reference angle of attack.

19. Rotary wing aircraft (1) comprising at least one thruster propeller, **characterized in that** it comprises a piloting device (10) according to any one of claims 14 to 18.

## Fig.1

## Fig.2

## Fig.3

Fig.4

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011040431 A
- US 20080237392 A

- WO 9950611 A